# FASCICULE DE BREVET EUROPEEN

(11) **EP 2 373 584 B1**
(45) Date de publication et mention de la délivrance du brevet: **04.09.2013**
(21) Numéro de dépôt: 09795761.7
(22) Date de dépôt: 17.12.2009
(51) Int. Cl.: C01G 56/00, C01G 43/025, G21C 3/62, B01J 8/20

(54) **PROCEDES DE PREPARATION D'UN OXALATE D'ACTINIDE(S) ET DE PREPARATION D'UN COMPOSE D'ACTINIDE(S)**
VERFAHREN ZUR HERSTELLUNG EINES ACTINIDOXALATS UND ZUR HERSTELLUNG EINER ACTINIDVERBINDUNG
METHODS FOR PREPARING AN ACTINIDE OXALATE AND FOR PREPARING AN ACTINIDE COMPOUND

(30) Priorité: 19.12.2008 FR 0858860
(43) Date de publication de la demande: 12.10.2011
(73) Titulaire: Commissariat à l'Énergie Atomique et aux Énergies Alternatives, 75015 Paris (FR); AREVA NC, 75009 Paris (FR)
(72) Inventeur: BERTRAND, Murielle, F-30700 Uzes (FR); GRANDJEAN, Stéphane, F-30330 Saint Marcel de Careiret (FR); COURTAUD, Bruno, F-87300 Bellac (FR); AUGER, Frédéric, F-87220 Boisseuil (FR)
(74) Mandataire: Ilgart, Jean-Christophe
(86) Numéro de dépôt international: PCT/EP2009/067443
(87) Numéro de publication internationale: WO 2010/070064

(56) Documents cités:
- FR-A- 2 870 841
- A.E. LEWIS: "Fines formation in seeded precipitation processes" KONA, vol. 24, 2006, page 119, XP002537776
- R.P. VAN HILLE: "Copper sulphide precipitation in a fluidized bed reactor" CHEMICAL ENGINEERING SCIENCE, vol. 60, 2005, pages 2571-2578, XP002537777
- M.M. SECKLER: "Phosphate removal in a fluidized bed" WAT. RES, vol. 30, no. 7, 1996, pages 1585-1588, XP002537778

## Description

### DOMAINE TECHNIQUE

La présente invention se rapporte à un procédé de préparation d'un oxalate d'actinide(s).

Elle se rapporte également à un procédé de préparation d'un composé d'actinide(s) et, en particulier, d'un oxyde, d'un carbure ou d'un nitrure d'actinide(s), mettant en oeuvre ce procédé.

L'invention permet d'obtenir des poudres d'oxalates simples ou mixtes d'actinides dotées de propriétés remarquables, notamment en ce qui concerne leur aptitude à être manipulées, à être filtrées et à être coulées, et, à partir de ces poudres d'oxalates, des poudres de composés simples ou mixtes d'actinides qui présentent ces mêmes propriétés.

Elle trouve application dans le domaine du traitement et du recyclage des combustibles nucléaires usés où elle présente un intérêt tout particulier pour la préparation de composés d'actinides propres à servir à la fabrication de pastilles de combustibles nucléaires du type oxydes, carbures ou nitrures et, plus spécialement, d'oxydes mixtes d'actinides.

Ces oxydes mixtes d'actinides peuvent notamment être des oxydes mixtes d'uranium et de plutonium avec éventuellement du neptunium ((U,Pu)O₂, ou (U,Pu,Np)O₂), des oxydes mixtes d'uranium et d'américium avec éventuellement du curium ((U,Am)O₂ ou (U,Am,Cm)O₂), des oxydes mixtes d'uranium et de curium ((U,Cm)O₂), ou bien encore des oxydes mixtes d'uranium, de plutonium et d'américium avec éventuellement du curium ((U,Pu,Am)O₂ ou (U,Pu,Am,Cm)O₂) et/ou du neptunium ((U,Pu,Np,Am)O₂ ou (U,Pu,Np,Am,Cm)O₂).

### ÉTAT DE LA TECHNIQUE ANTÉRIEURE

Le cycle du combustible nucléaire tel qu'il est mis en oeuvre par AREVA NC en France inclut des étapes qui consistent à convertir du nitrate d'uranyle et du nitrate de plutonium en oxydes que l'on utilise ensuite pour fabriquer des pastilles de combustibles nucléaires et, notamment, de combustibles MOX.

Sont ainsi produits de l'oxyde d'uranium UO₂, de l'oxyde de plutonium PuO₂ et des oxydes mixtes d'uranium et de plutonium (U,Pu)O₂. On parle, dans ce dernier cas, de coconversion.

Les (co)conversions du nitrate d'uranyle et du nitrate de plutonium sont actuellement réalisées par des procédés qui sont tous basés sur le même principe, à savoir que l'uranium, le plutonium ou ces deux éléments sont tout d'abord (co)précipités sous la forme d'un sel insoluble par mise en contact de l'un de ces nitrates ou d'un mélange des deux avec un agent de précipitation puis le (co)précipité obtenu est, après filtration, lavage et essorage, calciné pour être transformé en un oxyde.

Pour la préparation de l'oxyde d'uranium, l'agent de précipitation est typiquement de l'ammoniaque de sorte que l'uranium précipite sous la forme d'uranate d'ammonium qui conduit par calcination à du sesquioxyde d'uranium U₃O₈ que l'on réduit ensuite en UO₂.

Pour la préparation de l'oxyde de plutonium ou d'un oxyde mixte d'uranium et de plutonium, l'agent de précipitation est typiquement de l'acide oxalique de sorte que le (co)précipité obtenu est un oxalate.

Dans tous les cas, il est essentiel que le procédé de (co)conversion utilisé conduise à l'obtention d'une poudre d'oxyde qui présente des caractéristiques compatibles avec une utilisation dans les différentes opérations mises en oeuvre au cours de la fabrication de pastilles de combustibles nucléaires.

En particulier, cette poudre doit être aisément manipulable, avoir une bonne aptitude à la filtration ainsi qu'à l'écoulement. En outre, il est souhaitable qu'elle génère le moins possible de poussières pour éviter de disséminer des matières radioactives dans les enceintes confinées dans lesquelles sont fabriqués les pastilles de combustibles nucléaires et réduire les risques d'une contamination externe en cas de rupture de confinement.

Il importe donc que les (co)précipités à partir desquels sont obtenues les poudres d'UO₂, de PuO₂ et de (U,Pu)O₂ présentent, eux-mêmes, de telles caractéristiques et qu'en conséquence soient pris en compte, lors de la préparation de ces (co)précipités, les aspects granulométriques et morphologiques résultant des interactions entre les processus de nucléation, de croissance cristalline, d'agglomération et de brisure qui se produisent au cours d'une (co)précipitation.

La précipitation des actinides est traditionnellement réalisée dans des réacteurs agités. Or, l'utilisation de ce type de réacteur conduit à l'obtention de précipités qui présentent une distribution granulométrique dispersée avec la présence de particules très fines, génératrices de poussières.

La précipitation en réacteur à disque tournant permet généralement d'obtenir des précipités à distribution granulométrique plus resserrée mais pose des problèmes d'entartrage et d'accumulation de matières en raison du diamètre élevé du disque. Des études d'optimisation sont donc nécessaires pour limiter au mieux les dépôts de cristaux sur les parois dans la zone dite de nucléation que comportent ces réacteurs. Les problèmes d'entartrage sont d'autant plus aigus dans le cas des oxalates d'actinides que les nucléi qui se forment sont particulièrement collants. Dans certaines adaptations de cette technologie, le disque est remplacé par une turbine Rushton, ce qui conduit à augmenter le taux de cisaillement. Les problèmes d'entartrage peuvent alors s'avérer moins importants mais au détriment de la granulométrie du fait des phénomènes d'attrition.

La précipitation en réacteur à effet Vortex ne présente pas ces inconvénients. Ce type de réacteur est d'ailleurs employé avec succès dans l'industrie nucléaire pour la précipitation oxalique du plutonium. Ceci étant, elle ne représente pas une solution totalement satisfaisante dans la mesure où la capacité de production de (co)précipités d'actinides en réacteur à effet Vortex est limitée pour des raisons de criticité.

Or, dans la perspective de la réalisation de nouvelles usines de traitement de combustibles nucléaires usés dans lesquelles il est envisagé de produire des flux contenant plusieurs actinides purifiés, valorisables en oxydes, carbures ou nitrures mixtes d'actinides, il serait souhaitable de disposer d'un procédé qui permette de produire des oxalates d'actinides et, notamment, des oxalates mixtes à des cadences élevées.

Par ailleurs, il serait souhaitable que ce procédé permette d'obtenir des oxalates d'actinides sous la forme de poudres dont les caractéristiques granulométriques et morphologiques et, par voie de conséquence, les propriétés de manipulabilité, de filtrabilité et de coulabilité soient, si possible, encore plus intéressantes que celles présentées par les poudres d'oxalates d'actinides préparées en réacteur à effet Vortex.

Les Inventeurs se sont donc fixé pour but de fournir un tel procédé.

### EXPOSÉ DE L'INVENTION

Ce but est atteint par l'invention qui propose, en premier lieu, un procédé de préparation d'un oxalate d'un ou plusieurs actinides, qui comprend :
- la précipitation de cet actinide ou la coprécipitation de ces actinides sous la forme de particules d'oxalate par mise en contact d'une solution aqueuse contenant le ou les actinides avec une solution aqueuse d'acide oxalique ou d'un sel d'acide oxalique ; et
- le recueil des particules d'oxalate ainsi obtenues ;
et qui est caractérisé en ce que la précipitation ou coprécipitation est réalisée en lit fluidisé.

Pour des raisons de simplicité, le terme « (co)précipitation » sert à désigner, dans ce qui précède et ce qui suit, une précipitation ou une coprécipitation, tandis que le terme « (co)précipité » sert à désigner un précipité ou un coprécipité.

De manière similaire, le terme « (co)conversion » sert à désigner, dans ce qui précède et ce qui suit, une conversion ou une coconversion.

Par ailleurs, les expressions « solution d'actinide(s) » et « solution oxalique » servent à désigner respectivement, dans ce qui suit, la solution aqueuse contenant le ou les actinides et la solution aqueuse d'acide oxalique ou de sel d'acide oxalique précédemment mentionnées.

On rappelle que la précipitation en lit fluidisé est une technique de précipitation connue de l'homme du métier. En effet, son utilisation a déjà été décrite dans la littérature pour précipiter un certain nombre de sels comme des carbonates de calcium, de nickel, de zinc, de plomb ou de cuivre (voir par exemple, Van Ammers et al., Wat. Supply, 1986, 4, pp 223-235 ; Schöller et al. 1987, Proceedings of the Second Conference on Environmental Technology, Production and the Environment, pp 294-303 ; Nielsen et al. 1997, Water Sci. Techno., 36, pp 391-397 ; Zhou et al. 1999, Water Research, 33(8), pp 1918-1924), des phosphates de calcium, de fer ou de zinc (voir, par exemple, Seckler et al. 1996, Water Research, 30(7), pp 1585-1596), du sulfure de cuivre ou encore du perborate de sodium tétrahydraté (Frances et al. 1994, Chemical Engineering Science, 49(19), pp 3269-3276).

Le lecteur pourra donc, si nécessaire, se référer à ces documents pour connaître le principe de cette technique et ses différentes modalités de mise en oeuvre.

Conformément à l'invention, la solution d'actinide(s) présente typiquement une concentration totale en actinide(s) de 0,01 à 300 g/L et, de préférence de 10 à 100 g/L tandis que la solution oxalique présente typiquement une concentration en acide oxalique ou en sel d'acide oxalique de 0,05 à 1 mole/L et, de préférence, de 0,4 à 0,8 mole/L.

Le rapport volumique de la solution d'actinide(s) à la solution oxalique est préférentiellement choisi de sorte que l'acide oxalique ou le sel d'acide oxalique soit en excès par rapport aux conditions stoechiométriques de la réaction de précipitation de l'actinide ou des actinides, cet excès étant, de préférence, de 0,01 à 0,5 mole/L et, mieux encore, de 0,05 à 0,2 mole/L.

De préférence, la solution aqueuse d'actinide(s) contient le ou les actinides sous la forme de nitrate(s) puisque c'est sous cette forme que ces éléments sont généralement produits par les usines de traitement des combustibles nucléaires usés.

Par ailleurs, la solution d'actinide(s) est préférentiellement une solution acide et, plus spécialement, une solution d'acide nitrique, auquel cas elle contient généralement de 0,1 à 4 moles/L et, mieux encore, de 1 à 2 moles/L d'acide nitrique.

Cette solution et/ou la solution oxalique peuvent contenir de plus un cation monochargé qui est constitué uniquement d'atomes d'oxygène, de carbone, d'azote et d'hydrogène, et qui est apte à favoriser la formation d'un oxalate d'actinide(s) homogène, notamment (mais pas nécessairement) en stabilisant ce ou ces actinides à l'état d'oxydation dans lequel ils sont initialement présents dans ladite solution.

L'utilisation d'un tel cation, qui présente un intérêt tout particulier lorsque l'on souhaite coprécipiter plusieurs actinides dont l'un au moins se trouve à l'état d'oxydation IV tandis qu'un autre de ces actinides se trouve à l'état d'oxydation III - ce qui est, par exemple, le cas pour la préparation d'un oxalate mixte d'uranium(IV) et de plutonium(III) ou d'un oxalate mixte d'uranium(IV) et d'américium(III) - est décrite en détails dans la demande internationale PCT publiée sous le numéro WO 2005/119699.

Si le cation monochargé a vocation à stabiliser le ou les actinides à leur état d'oxydation et, notamment, aux états d'oxydation respectivement IV et III, alors ce cation est présent dans la solution aqueuse contenant ce ou ces actinides et est, de préférence, choisi parmi l'ion hydrazinium et les ions hydrazinium comprenant un ou plusieurs groupes alkyle, l'ion préféré entre tous étant l'ion hydrazinium.

Auquel cas, cet ion hydrazinium est avantageusement apporté par la présence de nitrate d'hydrazinium dans la solution d'actinide(s), par exemple à une concentration de 0,01 à 0,2 mole/L, ce nitrate d'hydrazinium étant préalablement obtenu en faisant réagir de l'acide nitrique avec de l'hydrazine, purs ou dilués dans de l'eau.

Si le cation monochargé n'a pas spécialement vocation à stabiliser le ou les actinides à leur état d'oxydation, alors ce cation peut être présent dans l'une ou l'autre de la solution d'actinide(s) et de la solution oxalique et est, de préférence, choisi parmi l'ion ammonium et les ions ammonium substitués tels que les ions alkylammonium, plus particulièrement parmi les ions ammonium substitués quaternaires tels que les ions tétraalkylammonium, l'ion préféré entre tous étant l'ion ammonium.

Auquel cas, cet ion ammonium peut être apporté soit par la présence d'ammoniaque dans la solution d'actinide(s), soit en réalisant la coprécipitation au moyen d'une solution aqueuse d'oxalate d'ammonium.

Le procédé selon l'invention est, de préférence, mis en oeuvre dans un réacteur à lit fluidisé qui, étant d'axe principal vertical, comprend :
- une partie intermédiaire dévolue à la fluidisation des particules de (co)précipité, c'est-à-dire d'oxalate d'actinide(s) ;
- une partie supérieure dévolue à la décantation des particules de (co)précipité ; et
- une partie inférieure dévolue à la sédimentation des particules de (co)précipité.

Auquel cas, le procédé comprend :
* la mise en contact, dans le réacteur à lit fluidisé, de la solution d'actinide(s) avec la solution oxalique par introduction de ces solutions dans ce réacteur, l'une au moins desdites solutions étant introduite dans la partie inférieure du réacteur de sorte à créer un courant ascendant de liquide ; moyennant quoi, il se forme un lit fluidisé de particules de (co)précipité dans la partie intermédiaire du réacteur ;
* la décantation des particules de (co)précipité dans la partie supérieure du réacteur ; moyennant quoi, il se forme deux phases, à savoir une phase solide constituée par les particules de (co)précipité et une phase liquide qui correspond au mélange des solutions aqueuses introduites dans le réacteur mais qui est appauvrie en actinide(s) et en acide oxalique ou sel d'acide oxalique ; et
* la sédimentation des particules de (co)précipité dans la partie inférieure du réacteur.

Conformément à l'invention, la formation des particules de (co)précipité dans le réacteur à lit fluidisé résulte uniquement de la mise en contact, dans ce réacteur, de la solution d'actinide(s) et de la solution oxalique, l'une avec l'autre.

Toutefois, il est également possible de faciliter la formation de ce (co)précipité en injectant dans le réacteur, simultanément à son remplissage en solution d'actinide(s) et en solution oxalique ou à l'issue de ce remplissage, une suspension de fines particules d'oxalate d'actinide(s) - c'est-à-dire de particules ayant typiquement une taille de 5 à 20 µm - qui vont jouer le rôle de germes (ou nucléi).

Ces particules d'ensemencement seront le plus souvent des particules ayant été préalablement obtenues par un procédé classique de précipitation en réacteur « batch », séchées et stockées en vue de leur utilisation ultérieure en tant que germes.

Toutefois, il peut également s'agir de particules qui sont obtenues au cours de la préparation d'un oxalate d'actinide(s) par le procédé selon l'invention, par exemple en alimentant, en solution d'actinide(s) et en solution oxalique, une cuve de (co)précipitation qui est indépendante du réacteur à lit fluidisé mais qui est reliée à lui par une conduite, avantageusement munie d'une pompe, propre à permettre le transfert, à un débit choisi, desdites particules dans ce réacteur.

Par ailleurs, il est tout à fait possible, conformément à l'invention, de prévoir que les particules de (co)précipité les plus fines - c'est-à-dire, en pratique, celles qui mesurent moins de 10 µm - présentes dans la partie supérieure du réacteur à lit fluidisé soient prélevées et transférées dans la partie inférieure de ce réacteur au cours de la (co)précipitation. On parle alors de « boucle de recyclage ».

Cette modalité de mise en oeuvre est d'ailleurs celle qui est préférée dans le cas de la préparation d'un oxalate mixte tel qu'un oxalate mixte d'uranium(IV) et de plutonium(III) ou un oxalate mixte d'uranium(IV) et d'américium(III).

Dans tous les cas, la (co)précipitation peut être réalisée à une température allant de 10 à 80°C, cette température étant celle qui règne dans le réacteur à lit fluidisé. Une température idéale est typiquement de l'ordre de 20 à 35°C.

Bien que le ou les actinides dont on souhaite préparer un oxalate puissent, conformément à l'invention, être choisis parmi tous les actinides connus, il s'agit typiquement d'uranium, de plutonium, de neptunium, de thorium, d'américium et/ou de curium.

En particulier, il s'agit d'uranium, de plutonium, de neptunium, d'américium et/ou de curium que l'on souhaite obtenir sous la forme d'un oxalate simple ou mixte propre à être transformé secondairement en un composé d'actinide(s) utile pour la fabrication de pastilles de combustibles nucléaires, du type oxyde, carbure ou nitrure.

Un tel oxalate est avantageusement un oxalate mixte, auquel cas celui-ci est, de préférence, un oxalate d'uranium(IV) et de plutonium(III), un oxalate d'uranium(IV) et d'américium(III), un oxalate d'uranium(IV) et de curium(III), un oxalate d'uranium(IV), de plutonium(III) et de neptunium(IV), un oxalate d'uranium(IV), de plutonium(III) et d'américium(III), un oxalate d'uranium(IV), d'américium(III) et de curium(III), un oxalate d'uranium(IV), de plutonium (III), d'américium(III) et de curium(III) ou encore un oxalate d'uranium(IV), de plutonium(III), de neptunium(V), d'américium(III) et de curium(III) à partir desquels on peut respectivement produire des oxydes mixtes (U,Pu)O₂, (U,Am)O₂, (U,Cm)O₂, (U,Pu,Np)O₂, (U,Pu,Am)O₂, (U,Am,Cm)O₂, (U,Pu,Am,Cm)O₂ et (U,Pu,Np,Am,Cm)O₂.

Parmi ces oxalates, préférence est donnée aux oxalates d'uranium(IV) et de plutonium(III), aux oxalates d'uranium(IV) et d'américium(III), ainsi qu'aux oxalates d'uranium(IV), de plutonium(III) et d'américium(III).

A cet égard, il va de soi que, dans le cas où le procédé selon l'invention est utilisé pour préparer un oxalate mixte d'actinides qui est destiné à être transformé ensuite en un oxyde mixte, les proportions respectives des actinides dans la solution aqueuse qui est mise en contact avec la solution oxalique sont choisies en fonction des proportions dans lesquelles ces actinides doivent se trouver dans l'oxyde mixte et du rendement de précipitation obtenu pour chacun d'eux.

Comme précédemment mentionné, le procédé selon l'invention comprend aussi le recueil des particules de (co)précipité, lequel est typiquement réalisé en soutirant les particules ayant sédimenté dans la partie inférieure du réacteur à lit fluidisé. Ce recueil peut être suivi d'opérations de séparation solide-liquide du type filtrations, centrifugations ou analogues, pour débarrasser les particules de (co)précipité de la phase liquide susceptible d'avoir été soutirée avec elles, ainsi que d'opérations de lavage et/ou de séchage.

Le procédé de préparation d'un oxalate d'actinide(s) selon l'invention présente de nombreux avantages.

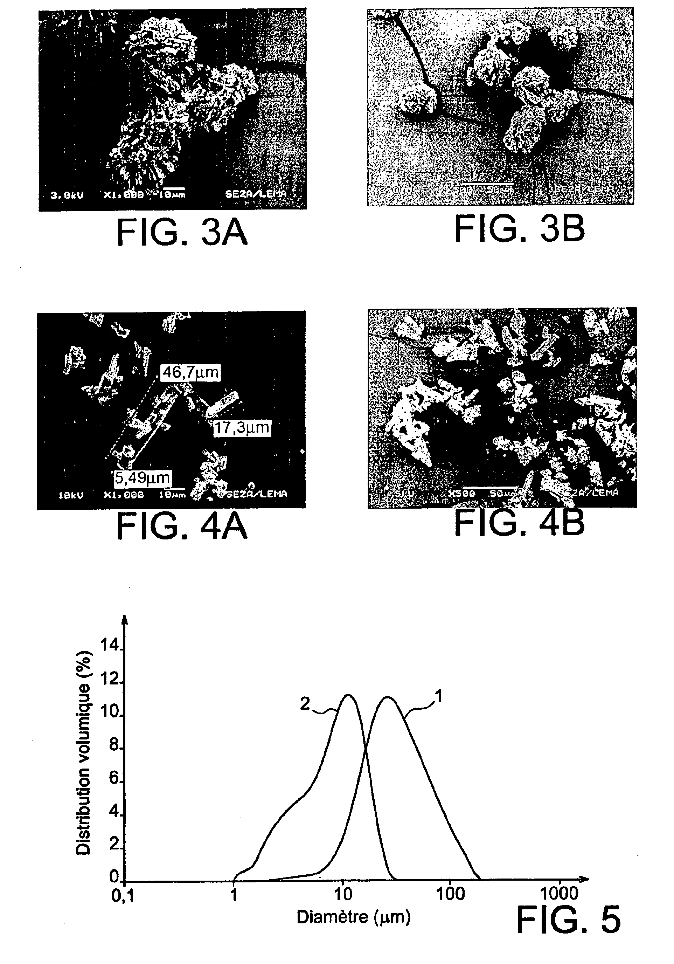

En effet, il permet d'obtenir des poudres d'oxalates simples ou mixtes d'actinides qui sont constituées de particules sphériques ou quasi sphériques (comme visible sur les figures 3A et 3B jointes en annexe), de taille moyenne supérieure à la taille moyenne des particules d'oxalates d'actinides obtenues à ce jour (y compris celles obtenues dans des réacteurs à effet Vortex), et qui présentent une granulométrie étroite et contrôlée, exempte de fines particules facilement dispersables.

Il en résulte que ces poudres présentent des propriétés remarquables de filtrabilité et de coulabilité, leur coulabilité après séchage étant, en effet, comparable à celle d'un sable sec.

Il en résulte également que ces poudres sont aisément manipulables et ne génèrent pas de poussières, diminuant ainsi les risques de dissémination et de contamination en cas de rupture de confinement.

Par ailleurs, l'utilisation d'un lit fluidisé ayant, entre autres avantages, celui d'offrir une grande surface de contact entre les phases liquide et solide, le procédé selon l'invention permet de plus de préparer des poudres d'oxalates d'actinides à des cadences élevées tout en utilisant des réacteurs à lit fluidisé de dimensions réduites, ce qui est particulièrement intéressant en termes de maîtrise des risques de criticité.

De plus, un lit fluidisé pouvant être utilisé selon des modalités très variées, le procédé selon l'invention présente une grande souplesse de mise en oeuvre avec la possibilité d'adapter parfaitement ce procédé en fonction de l'actinide ou des actinides dont on souhaite obtenir un oxalate et de l'usage auquel est destiné cet oxalate et, donc, des caractéristiques de taille, de composition ou autre que celui-ci doit présenter.

En outre, les problèmes d'entartrage et d'accumulation de matières rencontrés lors de l'utilisation de certains types de réacteur comme les réacteurs à disque tournant, n'existent pas avec les réacteurs à lit fluidisé, qui sont faciles à vidanger et à nettoyer, ce qui permet de simplifier les opérations de maintenance.

Le procédé selon l'invention est donc particulièrement adapté à la préparation d'oxalates d'actinides destinés à être transformés secondairement en composés d'actinides propres à servir à la fabrication de pastilles de combustibles nucléaires, du type oxydes, carbures ou nitrures.

Aussi, l'invention a-t-elle également pour objet un procédé de préparation d'un composé d'actinide(s) du type oxyde, carbure ou nitrure, qui comprend :
- la préparation d'un oxalate d'un ou plusieurs actinides par un procédé tel que précédemment défini ; et
- la calcination de cet oxalate.

La calcination des oxalates d'actinides en oxydes, carbures et nitrures d'actinides est bien connue de l'homme du métier.

On rappelle donc simplement qu'elle est généralement réalisée en température et sous une atmosphère qui peut être oxydante, inerte ou réductrice selon que l'on souhaite obtenir un oxyde, un carbure ou un nitrure d'actinide(s).

Ainsi :
* pour la synthèse d'oxydes, la température est généralement de l'ordre de 600 à 800°C et l'atmosphère est une atmosphère inerte, typiquement de l'azote ou de l'argon, ou oxydante, typiquement de l'air, selon les actinides considérés ;
* pour la synthèse de carbures, la température est généralement de l'ordre de 1500 à 1800°C et l'atmosphère est une atmosphère inerte, typiquement de l'azote ou de l'argon, ou réductrice, typiquement un mélange d'hydrogène et d'azote ou d'argon ; tandis que
* pour la synthèse de nitrures, la température est généralement de l'ordre de 1500 à 1800°C et l'atmosphère est une atmosphère réductrice, composée d'azote et d'hydrogène.

Pour la synthèse des carbures et des nitrures, la source de carbone nécessaire à la réduction carbothermique est soit ajoutée dans les atmosphères précitées, auquel cas elle est typiquement du méthane, soit présente dans l'oxalate d'actinide(s) sous forme moléculaire.

Conformément à l'invention, l'oxalate d'actinide(s) est avantageusement un oxalate mixte, auquel cas celui-ci est, de préférence, un oxalate d'uranium(IV) et de plutonium(III), un oxalate d'uranium(IV) et d'américium(III), un oxalate d'uranium(IV) et de curium(III), un oxalate d'uranium(IV), de plutonium(III) et de neptunium(IV), un oxalate d'uranium(IV), de plutonium(III) et d'américium(III), un oxalate d'uranium(IV), d'américium(III) et de curium(III), un oxalate d'uranium(IV), de plutonium(III), d'américium(III) et de curium(III) ou encore un oxalate d'uranium(IV), de plutonium(III), de neptunium(V), d'américium(III) et de curium(III) dont la calcination permet d'obtenir respectivement des oxydes mixtes (U,Pu)O₂, (U,Am)O₂, (U,Cm)O₂, (U,Pu,Np)O₂, (U,Pu,Am)O₂, (U,Am,Cm)O₂, (U,Pu,Am,Cm)O₂ et (U,Pu,Np,Am,Cm)O₂.

En particulier, il s'agit d'un oxalate mixte d'uranium(IV) et de plutonium(III), d'un oxalate d'uranium(IV) et d'américium(III) ou d'un oxalate d'uranium(IV), de plutonium(III) et d'américium(III).

D'autres caractéristiques et avantages de l'invention apparaîtront à la lecture du complément de description qui suit et qui se rapporte à deux exemples de mise en oeuvre de l'invention, l'un pour la préparation d'un oxalate de néodyme(III) décahydraté et, à partir de celui-ci, d'un oxyde de néodyme, et l'autre pour la préparation d'un oxalate mixte d'uranium(IV) et de cérium(III).

Bien entendu, ces exemples ne sont donnés qu'à titre d'illustrations de l'objet de l'invention et ne constituent en aucun cas une limitation de cet objet.

Il est à noter que le néodyme(III) et le cérium(III) ne sont pas des actinides mais des lanthanides qui présentent des propriétés chimiques extrêmement proches de celles des actinides trivalents (à savoir, le plutonium(III), l'américium(III) et le curium(III)), notamment en termes de solubilité et de complexation, mais qui, contrairement à ces derniers, ne sont pas radioactifs.

Il est donc classique de les utiliser à la place des actinides trivalents dans l'élaboration de procédés destinés à être mis en oeuvre sur ces actinides.

### BRÈVE DESCRIPTION DES FIGURES

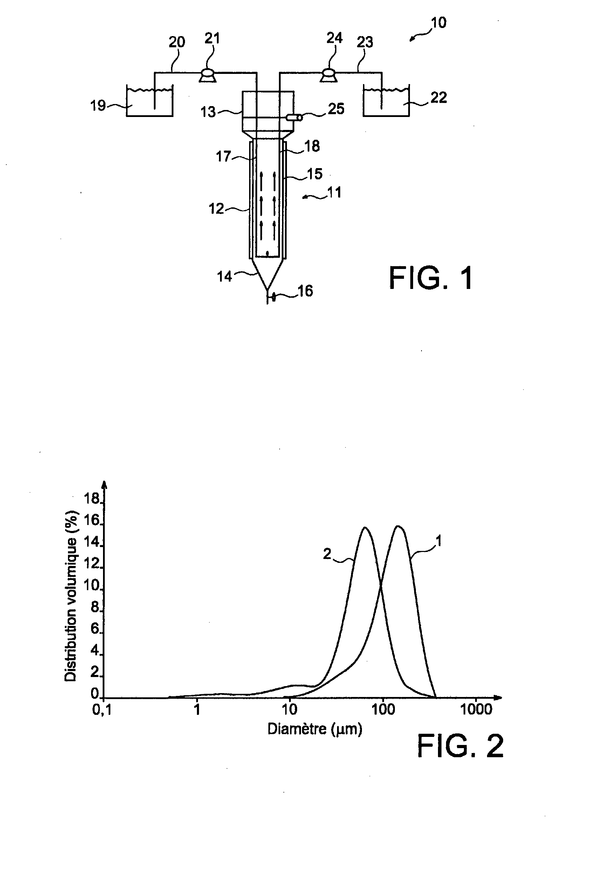

La figure 1 est un schéma qui représente une installation utile pour la préparation d'un oxalate de néodyme(III) décahydraté conformément à l'invention.

La figure 2 est un graphique qui représente, sous la forme de courbes, la distribution de taille en volume des particules d'un oxalate de néodyme(III) décahydraté préparé conformément à l'invention (courbe 1) et, à titre comparatif, celle de particules d'un oxalate de néodyme(III) décahydraté obtenu par précipitation dans un réacteur à effet Vortex (courbe 2) ; dans ce graphique, sont portés, sur l'axe des ordonnées, la fréquence en volume, exprimée en pourcentages, des particules d'oxalate de néodyme(III) décahydraté et, sur l'axe des abscisses, le diamètre, exprimé en micromètres, de ces particules.

Les figures 3A et 3B sont deux photographies prises au microscope électronique à balayage de particules d'un oxalate de néodyme(III) décahydraté préparé conformément à l'invention ; la figure 3A correspond à un grossissement de 1000 tandis que la figure 3B correspond à un grossissement de 500.

Les figures 4A et 4B sont deux photographies prises au microscope électronique à balayage de particules d'un oxalate de néodyme(III) décahydraté obtenu par précipitation dans un réacteur à effet Vortex ; la figure 4A correspond à un grossissement de 1000 tandis que la figure 4B correspond à un grossissement de 500.

La figure 5 est un graphique qui représente, sous la forme de courbes, la distribution de taille en volume de particules d'un oxyde de néodyme obtenu à partir d'un oxalate de néodyme(III) décahydraté préparé conformément à l'invention (courbe 1) et, à titre comparatif, celle de particules d'un oxyde de néodyme obtenu à partir d'un oxalate de néodyme(III) décahydraté préparé par précipitation dans un réacteur à effet Vortex (courbe 2) ; dans ce graphique, sont portés, sur l'axe des ordonnées, la fréquence en volume, exprimée en pourcentages, des particules d'oxyde de néodyme et, sur l'axe des abscisses, le diamètre, exprimé en micromètres, de ces particules.

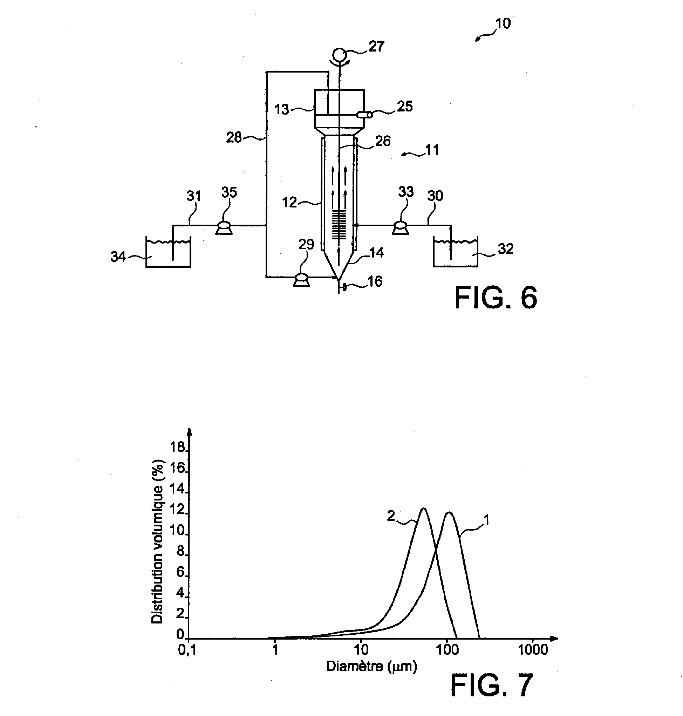

La figure 6 est un schéma qui représente une installation utile pour la préparation d'un oxalate mixte d'uranium(IV) et de cérium(III) conformément à l'invention.

La figure 7 est un graphique qui représente, sous la forme de courbes, la distribution de taille en volume de particules d'un oxalate mixte d'uranium(IV) et de cérium(III) préparé conformément à l'invention (courbe 1) et, à titre comparatif, celle de particules d'un oxalate mixte d'uranium(IV) et de cérium(III) obtenu par précipitation dans un réacteur à effet Vortex (courbe 2) ; dans ce graphique, sont portés, sur l'axe des ordonnées, la fréquence en volume, exprimée en pourcentages, des particules d'oxalate mixte d'uranium(IV) et de cérium(III) et, sur l'axe des abscisses, le diamètre, exprimé en micromètres, de ces particules.

Sur les figures 1 et 6, des références identiques sont utilisées pour désigner des éléments identiques.

### EXPOSÉ DÉTAILLÉ DE MODES DE MISE EN OEUVRE PARTICULIERS

### Exemple 1 : Préparation d'un oxalate de néodyme(III) décahydraté et d'un oxyde de néodyme à partir de cet oxalate

Dans cet exemple, on prépare tout d'abord un oxalate de néodyme(III) décahydraté en mettant en contact, dans un réacteur à lit fluidisé, une solution aqueuse à 30 g/L de nitrate de néodyme(III), acidifiée entre 0,5 et 2 moles/L par addition d'acide nitrique, avec une solution aqueuse comprenant à 0,7 mole/L d'acide oxalique.

Pour ce faire, on utilise l'installation 10 qui est représentée schématiquement sur la figure 1.

Cette installation comprend en tant qu'élément essentiel, un réacteur à lit fluidisé 11, d'axe principal vertical, qui se compose de trois parties :
- une partie intermédiaire 12, qui est dévolue à la fluidisation des particules d'oxalate de néodyme(III) décahydraté qui se forment suite à la mise en contact des solutions aqueuses de nitrate de néodyme(III) et d'acide oxalique ;
- une partie supérieure 13, qui est dévolue à la décantation des particules d'oxalate de néodyme(III) décahydraté ; et
- une partie inférieure 14, qui est dévolue à la sédimentation de ces particules et à leur collecte.

La partie intermédiaire 12 du réacteur 11 est constituée d'un cylindre, typiquement à section droite circulaire et à double paroi 15 à l'intérieur de laquelle circule un thermofluide, par exemple de l'eau, permettant de maintenir constante la température régnant dans ce réacteur. En l'espèce, la température utilisée est de 25°C.

La partie supérieure 13 est constituée d'un tronc de cône dont la petite base prend naissance à l'extrémité supérieure de la partie intermédiaire 12 et dont la grande base se prolonge par un cylindre, typiquement à section droite circulaire comme la partie intermédiaire 12 mais de diamètre supérieur à celui de cette dernière. Elle est, par ailleurs, munie d'une surverse 25 permettant d'éliminer du réacteur 11 la phase liquide, appauvrie en nitrate de néodyme(III) et en acide oxalique, qui résulte de la décantation des particules d'oxalate de néodyme(III) décahydraté.

La partie inférieure 14 est, quant à elle, constituée d'un cône dont la base prend naissance à l'extrémité inférieure de la partie intermédiaire 12 et dont le sommet (qui forme l'extrémité inférieure du réacteur 11) est muni d'un système 16 du type robinet, vanne ou analogue, permettant de collecter, par des soutirages, les particules d'oxalate de néodyme(III) décahydraté ayant sédimenté.

Les réactifs, c'est-à-dire la solution aqueuse de nitrate de néodyme(III) et la solution aqueuse d'acide oxalique, sont introduits dans le réacteur 11, au dessus de la limite entre les parties intermédiaire 12 et inférieure 14 de ce réacteur, à l'aide de deux cannes d'injection, respectivement 17 et 18, qui plongent dans le réacteur 11 en traversant ses parties supérieure 13 et intermédiaire 12.

La canne d'injection 17 est reliée à un réservoir 19 de solution aqueuse de nitrate de néodyme(III) via une conduite 20, laquelle est munie d'une pompe 21 permettant de régler le débit d'alimentation du réacteur 11 par la canne d'injection 17.

Quant à la canne d'injection 18, elle est reliée à un réservoir 22 de solution aqueuse d'acide oxalique via une conduite 23, qui est également munie d'une pompe 24 permettant de régler le débit d'alimentation du réacteur 11 par la canne d'injection 18.

Les débits d'alimentation du réacteur 11 par les cannes d'injection 17 et 18 sont ajustés de sorte à obtenir dans ce réacteur un excès d'acide oxalique par rapport aux conditions stoechiométriques de la réaction de précipitation de 0,05 à 0,2 mole/L.

Le réacteur 11, les réservoirs 19 et 22 et les conduites 20 et 23 sont munis de différents types de capteurs (indicateurs de pH, indicateurs de température, indicateurs de débit, etc) qui ne sont pas représentés sur la figure 1 par souci de clarté.

Comme visible sur la figure 1, le réacteur 11 ne comprend ni agitateur, ni boucle de recyclage, l'homogénéisation du mélange des réactifs et la fluidisation des particules d'oxalate de néodyme(III) décahydraté étant assurées uniquement par les débits d'alimentation de ce réacteur en ces réactifs.

La capacité de la partie intermédiaire 12 du réacteur 11 est de 1 litre.

Après 4 heures de fonctionnement en mode continu du réacteur 11, on recueille, en effectuant des soutirages au moyen du système 16 situé à son extrémité inférieure, des particules d'oxalate de néodyme(III) décahydraté que l'on filtre sur un filtre Büchner, que l'on lave et que l'on sèche pour obtenir une poudre.

La distribution des tailles en volume (mesurée à l'aide d'un granulomètre MALVERN, modèle Mastersizer^{®} X) des particules constituant cette poudre (courbe 1) ainsi que celle de particules d'un oxalate de néodyme(III) décahydraté obtenu par précipitation dans un réacteur à effet Vortex (courbe 2), en utilisant des conditions chimiques identiques (mêmes réactifs, mêmes concentrations initiales, même acidité, même excès oxalique, même température) à celles mentionnées ci-dessus, sont représentées sur la figure 2.

Comme visible sur cette figure, la courbe correspondant aux particules de l'oxalate de néodyme préparé conformément à l'invention est décalée vers la droite du graphique, c'est-à-dire vers des diamètres de particules plus élevés, par rapport à celle correspondant aux particules de l'oxalate de néodyme obtenu dans le réacteur à effet Vortex.

Ainsi, le diamètre D₄₃ (diamètre moyen) des particules de l'oxalate de néodyme préparé conformément à l'invention est de 161 µm alors qu'il n'est que de 72 µm pour les particules de l'oxalate de néodyme obtenu dans le réacteur à effet Vortex.

De plus, l'oxalate de néodyme préparé conformément à l'invention ne comprend pas de particules dont le diamètre soit inférieur à 9 µm et présente un diamètre D₁₀ de 31 µm (ce qui signifie qu'il n'y a que 10% des particules de cet oxalate qui ont une taille inférieure à 31 µm), alors que l'oxalate de néodyme obtenu dans le réacteur à effet Vortex comprend 6% de particules dont le diamètre est inférieur à 10 µm et son diamètre D₁₀ est de 17 µm (ce qui signifie que 10% des particules de cet oxalate ont une taille inférieure à 17 µm).

Par ailleurs, comme le montrent les figures 3A, 3B, 4A et 4B qui correspondent à des photographies prises au microscope électronique à balayage des particules de ces deux types d'oxalate, les particules de l'oxalate de néodyme préparé conformément à l'invention (figures 3A et 3B) ont une morphologie sphérique ou quasi sphérique, avec un facteur de forme volumique φᵥ de l'ordre de 0,5, ce qui n'est pas le cas des particules de l'oxalate de néodyme obtenu dans le réacteur à effet Vortex (figures 4A et 4B) qui, elles, se présentent sous la forme d'agglomérats de bâtonnets allongés et se caractérisent par un facteur de forme φᵥ de l'ordre de 0,02.

Par ailleurs, on prépare un oxyde de néodyme en calcinant sous air, à 700°C pendant 1 heure, l'oxalate de néodyme préparé conformément à l'invention.

La distribution des tailles en volume (mesurées à l'aide d'un granulomètre MALVERN, modèle Mastersizer^{®} X) des particules constituant cet oxyde (courbe 1) ainsi que celle de particules d'un oxyde de néodyme obtenu en calcinant, dans les mêmes conditions, un oxalate de néodyme(III) décahydraté préparé par précipitation dans un réacteur à effet Vortex (courbe 2) sont représentées sur la figure 5.

Cette figure montre que l'amélioration des caractéristiques granulométriques d'un oxalate se retrouve chez l'oxyde obtenu à partir de cet oxalate puisque les diamètres D₁₃ (diamètre moyen) et D₁₀ des particules de l'oxyde obtenu par calcination de l'oxalate de néodyme préparé conformément à l'invention sont respectivement de 46 µm et 15,5 µm alors qu'ils ne sont que de 12,7 µm et 2,1 µm pour les particules de l'oxyde obtenu par calcination de l'oxalate de néodyme préparé par précipitation dans un réacteur à effet Vortex.

### Exemple 2 : Préparation d'un oxalate mixte d'uranium(IV) et de cérium(III)

On prépare un oxalate mixte d'uranium(IV) et de cérium(III) en mettant en contact, dans un réacteur à lit fluidisé, une solution aqueuse à 20 g/L de nitrate d'uranyle et à 10 g/L de nitrate de cérium(III), acidifiée entre 0,5 et 2 moles/L par addition d'acide nitrique, avec une solution aqueuse à 0,7 mole/L d'acide oxalique.

Pour ce faire, on utilise l'installation 10 qui est représentée schématiquement sur la figure 6.

Cette installation est sensiblement identique à celle représentée sur la figure 1 pour ce qui concerne le réacteur à lit fluidisé 11.

Par contre, elle s'en différencie par le fait que la partie intermédiaire 12 du réacteur 11 est munie d'un agitateur 26, par exemple à pales, qui est entraîné en rotation par un moteur 27, par exemple à une vitesse de 20 tours/min, et qui est destiné à faciliter l'homogénéisation du mélange des réactifs qui sont introduits dans le réacteur.

Elle s'en différencie également par le fait que le réacteur 11 est équipé d'une boucle de recyclage 28, c'est-à-dire d'une conduite qui prend naissance dans la partie supérieure 13 de ce réacteur, sensiblement au niveau de la surverse 25, et se termine dans sa partie inférieure 14, à proximité du système 16 de soutirage, et dont le débit est réglé par une pompe 29, par exemple de type péristaltique. Cette boucle de recyclage permet de maintenir la fluidisation et de prélever les fines particules d'oxalate mixte d'uranium(IV) et de cérium(III) présentes dans la partie supérieure 13 du réacteur 11 et de réinjecter ces particules dans la partie inférieure 14 de ce réacteur.

Elle s'en différencie en outre par le fait que l'alimentation du réacteur 11 en réactifs n'est pas assurée par des cannes d'injection mais par deux conduites, respectivement 30 et 31, dont l'une s'abouche sur ce réacteur tandis que l'autre s'abouche sur la boucle de recyclage 28.

La conduite 30 est reliée à un réservoir 32 de solution aqueuse de nitrates d'uranyle et de cérium(III) et est munie d'une pompe 33 permettant de régler le débit d'alimentation du réacteur 11 par la conduite 30.

De manière similaire, la conduite 31 est reliée à un réservoir 34 de solution aqueuse d'acide oxalique et est munie d'une pompe 35 permettant de régler l'alimentation de la boucle de recyclage 28 par la conduite 31.

Les débits d'alimentation du réacteur 11 par la conduite 30 et de la boucle de recyclage par la conduite 31 sont ajustés de sorte à obtenir dans ce réacteur un excès d'acide oxalique par rapport aux conditions stoechiométriques de la réaction de précipitation de 0,05 à 0,2 mole/L.

La capacité de la partie intermédiaire 12 du réacteur 11 est, par ailleurs, beaucoup plus importante que celle du réacteur 11 de l'installation montrée sur la figure 1 puisqu'elle est de 80 litres.

La température qui règne dans le réacteur 11 est de 25°C.

Après 80 heures de fonctionnement en mode continu du réacteur 11, on recueille, en effectuant des soutirages au moyen du système 16 situé à son extrémité inférieure, des particules d'un oxalate mixte d'uranium(IV) et de cérium(III) que l'on filtre sur un filtre Büchner, que l'on lave et que l'on sèche pour obtenir une poudre.

La distribution des tailles en volume (mesurée à l'aide d'un granulomètre laser MALVERN, modèle Mastersizer^{®} X) des particules constituant cette poudre (courbe 1) ainsi que celle de particules d'un oxalate mixte d'uranium(IV) et de cérium(III) préparé par précipitation dans un réacteur à effet Vortex (courbe 2), en utilisant les mêmes réactifs et les mêmes débits que ceux mentionnés ci-dessus, sont représentées, sous la forme de courbes, sur la figure 7.

Comme le montre sur cette figure, la courbe correspondant aux particules de l'oxalate mixte d'uranium et de cérium préparé conformément à l'invention est, là également, décalée vers la droite du graphique, c'est-à-dire vers des diamètres de particules plus élevés, par rapport à celle correspondant aux particules de l'oxalate mixte d'uranium et de cérium obtenu par précipitation dans le réacteur à effet Vortex.

Le diamètre D₄₃ (diamètre moyen) des particules de l'oxalate mixte d'uranium et de cérium préparé conformément à l'invention est de 90 µm alors qu'il n'est que de 45 µm pour les particules de l'oxalate mixte d'uranium et de cérium obtenu dans le réacteur à effet Vortex.

De plus, le diamètre D₁₀ des particules de l'oxalate mixte d'uranium et de cérium préparé conformément à l'invention est de l'ordre de 25 µm (ce qui signifie qu'il n'y a que 10% des particules de cet oxalate qui ont une taille inférieure à 25 µm) alors que le diamètre D₁₀ des particules de l'oxalate mixte d'uranium et de cérium obtenu dans le réacteur à effet Vortex est de 9 µm (ce qui signifie que 10% des particules de cet oxalate ont une taille inférieure à 9 µm).

### REFERENCES CITEES

[1] Van Ammers et al. 1986, Wat. Supply, 4, pp 223-235
[2] Schöller et al. 1987, Proceedings of the Second Conference on Environmental Technology, Production and the Environment, pp 294-303
[3] Nielsen et al. 1997, Water Sci. Techno., 36, pp 391-397
[4] Zhou et al. 1999, Water Research, 33(8), pp 1918-1924
[5] Seckler et al. 1996, Water Research, 30(7), pp 1585-1596
[6] Frances et al. 1994, Chemical Engineering Science, 49(19), pp 3269-3276
[7] Demande internationale PCT WO 2005/119699

## Revendications

1. Procédé de préparation d'un oxalate d'un ou plusieurs actinides, comprenant :
- la précipitation de cet actinide ou la coprécipitation de ces actinides sous la forme de particules d'oxalate par mise en contact d'une solution aqueuse contenant le ou les actinides avec une solution aqueuse d'acide oxalique ou d'un sel d'acide oxalique ; et
- le recueil des particules d'oxalate ainsi obtenues ;
**caractérisé en ce que** la précipitation ou coprécipitation est réalisée en lit fluidisé.

2. Procédé selon la revendication 1, **caractérisé en ce que** la solution aqueuse contenant le ou les actinides présente une concentration totale en actinide(s) de 0,01 à 300 g/L.

3. Procédé selon la revendication 1 ou la revendication 2, **caractérisé en ce que** la solution aqueuse d'acide oxalique ou de sel d'acide oxalique présente une concentration en acide oxalique ou en sel d'acide oxalique de 0,05 à 1 mole/L.

4. Procédé selon la revendication 2 ou la revendication 3, **caractérisé en ce que** le rapport volumique de la solution aqueuse contenant le ou les actinides à la solution aqueuse d'acide oxalique ou de sel d'acide oxalique est tel que l'acide oxalique ou le sel d'acide oxalique est en excès par rapport aux conditions stoechiométriques de la réaction de précipitation de l'actinide ou des actinides, cet excès étant de 0,01 à 0,5 mole/L.

5. Procédé selon l'une quelconque des revendications précédentes, **caractérisé en ce que** le ou les actinides sont présents dans la solution aqueuse les contenant sous la forme de nitrates.

6. Procédé selon l'une quelconque des revendications précédentes, **caractérisé en ce que** la solution aqueuse contenant le ou les actinides est une solution acide.

7. Procédé selon la revendication 6, **caractérisé en ce que** la solution aqueuse contenant le ou les actinides est une solution d'acide nitrique qui contient de 0,1 à 4 moles/L d'acide nitrique.

8. Procédé selon l'une quelconque des revendications précédentes, **caractérisé en ce que** la solution aqueuse contenant le ou les actinides et/ou la solution aqueuse d'acide oxalique ou de sel d'acide oxalique contiennent de plus un cation monochargé, constitué uniquement d'atomes d'oxygène, de carbone, d'azote et d'hydrogène.

9. Procédé selon la revendication 8, **caractérisé en ce que** le cation monochargé est l'ion hydrazinium et est présent dans la solution aqueuse contenant le ou les actinides sous la forme de nitrate d'hydrazinium.

10. Procédé selon l'une quelconque des revendications précédentes, **caractérisé en ce qu'**il est mis en oeuvre dans un réacteur à lit fluidisé d'axe principal vertical, qui comprend :
- une partie intermédiaire dévolue à la fluidisation des particules d'oxalate d'actinide(s) ;
- une partie supérieure dévolue à la décantation des particules d'oxalate d'actinide(s) ; et
- une partie inférieure dévolue à la sédimentation des particules d'oxalate d'actinide(s).

11. Procédé selon la revendication 10, **caractérisé en ce qu'**il comprend :
* la mise en contact, dans le réacteur à lit fluidisé, de la solution aqueuse contenant le ou les actinides avec la solution d'acide oxalique ou de sel d'acide oxalique par introduction de ces solutions dans ce réacteur, l'une au moins desdites solutions étant introduite dans la partie inférieure du réacteur de sorte à créer un courant ascendant de liquide, moyennant quoi il se forme un lit fluidisé de particules d'oxalate d'actinide(s) dans la partie intermédiaire du réacteur ;
* la décantation des particules d'oxalate d'actinide(s) dans la partie supérieure du réacteur, moyennant quoi il se forme deux phases : une phase solide constituée par les particules d'oxalate d'actinide(s) et une phase liquide résultant du mélange des solutions aqueuses introduites dans le réacteur et de leur appauvrissement, respectivement en actinide(s) et en acide oxalique ou en sel d'acide oxalique ;
* la sédimentation des particules d'oxalate d'actinide(s) dans la partie inférieure du réacteur ; et
* le prélèvement des fines particules d'oxalate d'actinide(s) présentes dans la partie supérieure du réacteur et leur renvoi dans la partie inférieure de ce réacteur.

12. Procédé selon l'une quelconque des revendications précédentes, **caractérisé en ce que** le ou les actinides sont choisis parmi l'uranium, le plutonium, le neptunium, le thorium, l'américium et le curium.

13. Procédé selon l'une quelconque des revendications précédentes, **caractérisé en ce que** l'oxalate préparé est un oxalate mixte choisi parmi les oxalates d'uranium(IV) et de plutonium(III), les oxalates d'uranium(IV) et d'américium(III), les oxalates d'uranium(IV) et de curium(III), les oxalates d'uranium(IV), de plutonium(III) et de neptunium(IV), les oxalates d'uranium(IV), de plutonium(III) et d'américium(III), les oxalates d'uranium(IV), d'américium(III) et de curium(III), les oxalates d'uranium(IV), de plutonium(III), d'américium(III) et de curium(III) et les oxalates d'uranium(IV), de plutonium(III), de neptunium(IV), d'américium(III) et de curium(III).

14. Procédé de préparation d'un composé d'actinide(s) du type oxyde, carbure ou nitrure, **caractérisé en ce qu'**il comprend :
- la préparation d'un oxalate d'un ou plusieurs actinides par un procédé selon l'une quelconque des revendications 1 à 13 ; et
- la calcination de cet oxalate.

15. Procédé selon la revendication 14, caractérisé(e) en ce que l'oxalate est un oxalate mixte choisi parmi les oxalates d'uranium(IV) et de plutonium(III), les oxalates d'uranium(IV) et d'américium(III), les oxalates d'uranium(IV) et de curium(III), les oxalates d'uranium(IV), de plutonium(III) et de neptunium(IV), les oxalates d'uranium(IV), de plutonium(III) et d'américium(III), les oxalates d'uranium(IV), d'américium(III) et de curium(III), les oxalates d'uranium(IV), de plutonium(III), d'américium(III) et de curium(III) et les oxalates d'uranium(IV), de plutonium(III), de neptunium(V), d'américium(III) et de curium(III).

16. Procédé selon la revendication 14, caractérisé(e) en ce que le composé d'actinide(s) est un oxyde mixte choisi parmi les oxydes mixtes d'uranium et de plutonium, les oxydes mixtes d'uranium et d'américium, les oxydes d'uranium(IV) et de curium(III), les oxydes mixtes d'uranium, de plutonium et de neptunium, les oxydes mixtes d'uranium, de plutonium et d'américium, les oxydes mixtes d'uranium, d'américium et de curium, les oxydes mixtes d'uranium, de plutonium, d'américium et de curium et les oxydes mixtes d'uranium, de plutonium, de neptunium, d'américium et de curium.

## Patentansprüche

1. Verfahren zur Herstellung eines Oxalats eines oder mehrerer Aktiniden, umfassend:
- die Fällung dieses Aktinids oder die gemeinsame Fällung dieser Aktiniden in Form von Oxalatpartikeln, indem man eine wässrige Lösung, welche das oder die Aktiniden enthält, in Kontakt bringt mit einer wässrigen Lösung von Oxalsäure oder von Oxalsäuresalz; und
- das Sammeln der derart erhaltenen Oxalatpartikel;
**dadurch gekennzeichnet, dass** die Fällung oder die gemeinsame Fällung im Fließbett erfolgt.

2. Verfahren nach Anspruch 1, **dadurch gekennzeichnet, dass** die wässrige Lösung, welche das oder die Aktiniden enthält, eine Aktinid(en)-Gesamtkonzentration von 0,01 bis 300 g/L aufweist.

3. Verfahren nach Anspruch 1 oder Anspruch 2, **dadurch gekennzeichnet, dass** die wässrige Lösung von Oxalsäure oder von Oxalsäuresalz eine Oxalsäure-oder Oxalsäuresalz-Konzentration von 0,05 bis 1 Mol/L aufweist.

4. Verfahren nach Anspruch 2 oder Anspruch 3, **dadurch gekennzeichnet, dass** das Volumenverhältnis der wässrigen Lösung, welche das oder die Aktiniden enthält, zu der wässrigen Lösung von Oxalsäure oder von Oxalsäuresalz derart eingestellt ist, dass die Oxalsäure oder das Oxalsäuresalz im Überschuss vorliegt bezüglich der stöchiometrischen Bedingungen der Fällungsreaktion des Aktinids oder der Aktiniden, wobei dieser Überschuss von 0,01 bis 0,5 Mol/L beträgt.

5. Verfahren nach einem der vorhergehenden Ansprüche, **dadurch gekennzeichnet, dass** das oder die Aktiniden in der sie enthaltenden wässrigen Lösung in der Form von Nitraten vorliegen.

6. Verfahren nach einem der vorhergehenden Ansprüche, **dadurch gekennzeichnet, dass** die wässrige Lösung, welche das oder die Aktiniden enthält, eine saure Lösung ist.

7. Verfahren nach Anspruch 6, **dadurch gekennzeichnet, dass** die wässrige Lösung, welche das oder die Aktiniden enthält, eine Salpetersäurelösung ist, die von 0,1 bis 4 Mol/L Salpetersäure enthält.

8. Verfahren nach einem der vorhergehenden Ansprüche, **dadurch gekennzeichnet, dass** die wässrige Lösung, welche das oder die Aktiniden enthält, und/oder die wässrige Lösung von Oxalsäure oder von Oxalsäuresalz zudem ein einfach geladenes Kation enthalten, das ausschließlich aus Sauerstoff-, Kohlenstoff-, Stickstoff- und Wasserstoffatomen gebildet ist.

9. Verfahren nach Anspruch 8, **dadurch gekennzeichnet, dass** das einfach geladene Kation das Hydrazinium-Ion ist und in der wässrigen Lösung, welche das oder die Aktiniden enthält, in der Form von Hydraziniumnitrat vorliegt.

10. Verfahren nach einem der vorhergehenden Ansprüche, **dadurch gekennzeichnet, dass** es in einem Fließbettreaktor mit vertikaler Hauptachse durchgeführt wird, der umfasst:
- einen Zwischenbereich für die Fluidisierung der Aktinid(en)-Oxalatpartikel;
- einen oberen Bereich für die Dekantierung der Aktinid(en)-Oxalatpartikel; und
- einen unteren Bereich für die Sedimentierung der Aktinid(en)-Oxalatpartikel.

11. Verfahren nach Anspruch 10, **dadurch gekennzeichnet, dass** es umfasst:
• das Inkontaktbringen, in dem Fließbettreaktor, der wässrigen Lösung, welche das oder die Aktiniden enthält, mit der Oxalsäure- oder der Oxalsäuresalzlösung durch Einführen dieser Lösungen in diesen Reaktor, wobei wenigstens eine der Lösungen in den unteren Bereich des Reaktors derart eingeführt wird, dass ein aufsteigender Flüssigkeitsstrom erzeugt wird, mittels dessen sich ein Fließbett von Aktinid(en)-Oxalatpartikeln im mittleren Bereich des Reaktors bildet;
• das Dekantieren der Aktinid(en)-Oxalatpartikel im oberen Bereich des Reaktors, wodurch sich zwei Phasen bilden: eine feste Phase, gebildet durch die Aktinid(en)-Oxalatpartikel, sowie eine flüssige Phase, die aus der Mischung der wässrigen Lösungen resultiert, die in den Reaktor eingeführt wurden, sowie aus ihrer Abreicherung an Aktinid(en) und an Oxalsäure oder an Oxalsäuresalz;
• die Sedimentierung der Aktinid(en)-Oxalatpartikel im unteren Bereich des Reaktors; und
• die Entnahme der feinen Aktinid(en)-Oxalatpartikel, welche im oberen Bereich des Reaktors vorhanden sind, und ihr Zurückbringen in den unteren Bereich dieses Reaktors.

12. Verfahren nach einem der vorhergehenden Ansprüche, **dadurch gekennzeichnet, dass** das oder die Aktiniden ausgewählt sind aus Uran, Plutonium, Neptunium, Thorium, Americium und Curium.

13. Verfahren nach einem der vorhergehenden Ansprüche, **dadurch gekennzeichnet, dass** das hergestellte Oxalat ein Mischoxolat ist, ausgewählt aus den Oxalaten von Uran (IV) und Plutonium (III), den Oxalaten von Uran (IV) und Americium (III), den Oxalaten von Uran (IV) und Curium (III), den Oxalaten von Uran (IV), von Plutonium (III) und von Neptunium (IV), den Oxalaten von Uran (IV), von Plutonium (III) und von Americium (III), den Oxalaten von Uran (IV), von Americium (III) und von Curium (III), den Oxalaten von Uran (IV), von Plutonium (III), von Americium (III) und von Curium (III) und den Oxalaten von Uran (IV), von Plutonium (III), von Neptunium (IV), von Americium (III) und von Curium (III).

14. Verfahren zur Herstellung einer Aktinid(en)verbindung vom Typ Oxid, Karbid oder Nitrid, **dadurch gekennzeichnet, dass** es umfasst:
- die Herstellung eines Oxalats eines oder mehrerer Aktiniden mittels eines Verfahrens nach einem der Ansprüche 1 bis 13; und
- die Kalzination dieses Oxalats.

15. Verfahren nach Anspruch 14, **dadurch gekennzeichnet, dass** das Oxalat ein Mischoxalat ist, ausgewählt aus ausgewählt aus den Oxalaten von Uran (IV) und Plutonium (III), den Oxalaten von Uran (IV) und Americium (III), den Oxalaten von Uran (IV) und Curium (III), den Oxalaten von Uran (IV), von Plutonium (III) und von Neptunium (IV), den Oxalaten von Uran (IV), von Plutonium (III) und von Americium (III), den Oxalaten von Uran (IV), von Americium (III) und von Curium (III), den Oxalaten von Uran (IV), von Plutonium (III), von Americium (III) und von Curium (III) und den Oxalaten von Uran (IV), von Plutonium (III), von Neptunium (V), von Americium (III) und von Curium (III).

16. Verfahren nach Anspruch 14, **dadurch gekennzeichnet, dass** die Aktinid(en)verbindung ein Mischoxid ist, ausgewählt aus den Mischoxiden von Uran und von Plutonium, den Mischoxiden von Uran und von Americium, den Oxiden von Uran (IV) und von Curium (III), den Mischoxiden von Uran, von Plutonium und von Neptunium, den Mischoxiden von Uran, von Plutonium und von Americium, den Mischoxiden von Uran, von Americium und von Curium, den Mischoxiden von Uran, von Plutonium, von Americium und von Curium sowie den Mischoxiden von Uran, von Plutonium, von Neptunium, von Americium und von Curium.

## Claims

1. Method for preparing an oxalate of one or more actinides, comprising:
- the precipitation of said actinide or the coprecipitation of said actinides in the form of oxalate particles by bringing into contact an aqueous solution containing the actinide(s) with an aqueous solution of oxalic acid or of an oxalic acid salt; and
- the collection of the resulting oxalate particles;
**characterised in that** the precipitation or coprecipitation is carried out in fluidised bed.

2. Method according to claim 1, **characterised in that** the aqueous solution containing the actinide(s) has a total concentration of actinide(s) of 0.01 to 300 g/L.

3. Method according to claim 1 or claim 2, **characterised in that** the aqueous solution of oxalic acid or oxalic acid salt has a concentration of oxalic acid or oxalic acid salt of 0.05 to 1 mole/L.

4. Method according to claim 2 or claim 3, **characterised in that** the volume ratio of the aqueous solution containing the actinide(s) to the aqueous solution of oxalic acid or oxalic acid salt is such that the oxalic acid or the oxalic acid salt is in excess compared to the stoichiometric conditions of the precipitation reaction of the actinide or the actinides, this excess being from 0.01 to 0.5 mole/L.

5. Method according to any of the preceding claims, **characterised in that** the actinide(s) are present in the aqueous solution that contains them in the form of nitrates.

6. Method according to any of the preceding claims, **characterised in that** the aqueous solution containing the actinide(s) is an acid solution.

7. Method according to claim 6, **characterised in that** the aqueous solution containing the actinide(s) is a solution of nitric acid that contains from 0.1 to 4 moles/L of nitric acid.

8. Method according to any of the preceding claims, **characterised in that** the aqueous solution containing the actinide(s) and/or the aqueous solution of oxalic acid or oxalic acid salt contain, in addition, a monocharged cation, constituted uniquely of atoms of oxygen, carbon, nitrogen and hydrogen.

9. Method according to claim 8, **characterised in that** the monocharged cation is the hydrazinium ion and is present in the aqueous solution containing the actinide(s) in the form of hydrazinium nitrate.

10. Method according to any of the preceding claims, **characterised in that** it is used in a fluidised bed reactor of vertical main axis, which comprises:
- an intermediate part allocated to the fluidisation of actinide(s) oxalate particles;
- an upper part allocated to the decantation of actinide(s) oxalate particles; and
- a lower part allocated to the sedimentation of actinide(s) oxalate particles.

11. Method according to claim 10, **characterised in that** it comprises:
* the bringing into contact, in the fluidised bed reactor, of the aqueous solution containing the actinide(s) with the solution of oxalic acid or oxalic acid salt by introducing said solutions into said reactor, one at least of said solutions being introduced into the lower part of the reactor so as to create an ascending current of liquid, as a result of which is formed a fluidised bed of actinide(s) oxalate particles in the intermediate part of the reactor;
* the decantation of actinide oxalate particles in the upper part of the reactor, as a result of which two phases are formed: a solid phase constituted of actinide(s) oxalate particles and a liquid phase resulting from the mixing of the aqueous solutions introduced into the reactor and their depletion, respectively into actinide(s) and into oxalic acid or into oxalic acid salt;
* the sedimentation of actinide(s) oxalate particles in the lower part of the reactor; and
* the withdrawal of the fine actinide(s) oxalate particles present in the upper part of the reactor and their transfer into the lower part of said reactor.

12. Method according to any of the preceding claims, **characterised in that** the actinide(s) are chosen from uranium, plutonium, neptunium, thorium, americium and curium.

13. Method according to any of the preceding claims, **characterised in that** the oxalate prepared is a mixed oxalate chosen from the oxalates of uranium(IV) and of plutonium(III), the oxalates of uranium(IV) and of americium(III), the oxalates of uranium(IV) and of curium(III), the oxalates of uranium(IV), of plutonium(III) and of neptunium(IV), the oxalates of uranium(IV), of plutonium(III) and of americium(III), the oxalates of uranium(IV), of americium(III) and of curium(III), the oxalates of uranium(IV), of plutonium(III), of americium(III) and of curium(III) and the oxalates of uranium(IV), of plutonium(III), of neptunium(IV), of americium(III) and of curium(III).

14. Method for preparing an actinide(s) compound of the oxide, carbide or nitride type, **characterised in that** it comprises:
- the preparation of an oxalate of one or more actinides by a method according to any of claims 1 to 13; and
- the calcination of said oxalate.

15. Method according to claim 14, **characterised in that** the oxalate is a mixed oxalate chosen from the oxalates of uranium(IV) and of plutonium(III), the oxalates of uranium(IV) and of americium(III), the oxalates of uranium(IV) and of curium(III), the oxalates of uranium(IV), of plutonium(III) and of neptunium(IV), the oxalates of uranium(IV), of plutonium(III) and of americium(III), the oxalates of uranium(IV), of americium(III) and of curium(III), the oxalates of uranium(IV), of plutonium(III), of americium(III) and of curium(III) and the oxalates of uranium(IV), of plutonium(III), of neptunium(V), of americium(III) and of curium(III).

16. Method according to claim 14, **characterised in that** the actinide(s) compound is a mixed oxide chosen from the mixed oxides of uranium and of plutonium, the mixed oxides of uranium and of americium, the oxides of uranium(IV) and of curium(III), the mixed oxides of uranium, of plutonium and of neptunium, the mixed oxides of uranium, of plutonium and of americium, the mixed oxides of uranium, of americium and of curium, the mixed oxides of uranium, of plutonium, of americium and of curium and the mixed oxides of uranium, of plutonium, of neptunium, of americium and of curium.
